# EUROPÄISCHE PATENTSCHRIFT

(11) **EP 2 948 360 B1**
(45) Veröffentlichungstag und Bekanntmachung des Hinweises auf die Patenterteilung: **25.10.2017**
(21) Anmeldenummer: 14700515.1
(22) Anmeldetag: 15.01.2014
(51) Int. Cl.: B62D 1/16

(54) **LAGERANORDNUNG FÜR EINE LENKWELLE**
BEARING ARRANGEMENT FOR A STEERING SHAFT
ARRANGEMENT D'UN PALIER POUR UN ARBRE DE DIRECTION

(30) Priorität: 28.01.2013 DE 202013100373 U
(43) Veröffentlichungstag der Anmeldung: 02.12.2015
(73) Patentinhaber: Rollax GmbH & Co. Kg, 32107 Bad Salzuflen (DE)
(72) Erfinder: BÖKE, Heike, 32549 Bad Oeynhausen (DE); SOMMER, Andreas, 32683 Barntrup (DE)
(74) Vertreter: Ter Meer Steinmeister & Partner
(86) Internationale Anmeldenummer: PCT/EP2014/050740
(87) Internationale Veröffentlichungsnummer: WO 2014/114543

(56) Entgegenhaltungen:
- EP-A1- 0 968 900
- JP-A- H11 334 606

## Beschreibung

Die Erfindung betrifft eine Lageranordnung für eine Lenkwelle eines Kraftfahrzeugs, mit einer Lagerplatte, die eine Einstülpung und am Grund dieser Einstülpung einen Lagersitz aufweist, in dem ein Lager für die Lenkwelle so gehalten ist, das die Lenkwelle schräg zu einer durch den äußeren Rand der Einstülpung definierten Plattenebene verläuft, und mit einem die Lenkwelle umgebenden und in die Einstülpung eingepassten Einsatz aus Kunststoff.

Mit Hilfe einer solchen Lageranordnung wird die Lenkwelle eines Kraftfahrzeugs an der Stelle gelagert, an der sie durch eine die Fahrgastzelle nach vom abschließende Karosseriewand hindurchtritt. Da die Lenkwelle schräg zur Plattenebene verläuft, hat die Einstülpung eine asymmetrische Gestalt, bisher zumeist die Gestalt eines schiefen Kegelstumpfes. Der Einsatz aus Kunststoff hat den Zweck, die Übertragung von Schall und Vibrationen zu dämpfen und wird bisher durch ein Formteil gebildet, das den durch die Einstülpung gebildeten Hohlraum nahezu vollständig ausfüllt.

EP 0 968 900 A1 zeigt einen Lageranordnung, die der oben beschriebenen Anordnung ähnelt, bei der jedoch das schalldämpfende Element aus Kunststoff außerhalb der Einstülpung liegt. JP H11 334606 A zeigt eine Anordnung, bei der das schalldämpfende Element eine Platte mit einheitlicher Dicke ist, die innerhalb einer konischen Einstülpung liegt.

Aufgabe der Erfindung ist es, eine Lageranordnung zu schaffen, die sich einfach herstellen lässt und dennoch gute schall- und vibrationsdämpfende Eigenschaften aufweist.

Diese Aufgabe wird gemäß einem Aspekt der Erfindung dadurch gelöst, dass die Einstülpung mindestens einen Abschnitt mit rechtwinklig zu der Plattenebene verlaufenden Wänden aufweist und dass der Einsatz mindestens eine in den Querschnitt dieses Abschnitts eingepasste Scheibe mit einheitlicher Dicke aufweist.

Der Einsatz braucht somit nicht mehr aufwendig in einem Formwerkzeug hergestellt zu werden, sondern kann einfach durch die Scheibe gebildet werden, die sich mit der gewünschten Umrissform aus einer vorgefertigten Platte eines geeigneten Materials ausschneiden lässt. Da somit das Kunststoffmaterial nicht formbar zu sein braucht, kann das Material im Hinblick auf die schall- und vibrationsdämpfenden Eigenschaften optimiert werden. Auf diese Weise werden die Herstellungskosten gesenkt, und zugleich wird eine verbesserte Schalldämmung erreicht.

Vorteilhafte Ausgestaltungen und Weiterbildungen der Erfindung ergeben sich aus den Unteransprüchen.

In einer bevorzugten Ausführungsform besteht der Einsatz aus einem Schaumkunststoff.

In einer besonders bevorzugten Ausführungsform wird der Einsatz durch mindestens zwei übereinander gestapelte Scheiben aus verschiedenen Kunststoffen gebildet, die sich in ihren akustischen Eigenschaften unterscheiden, beispielsweise indem sie eine unterschiedliche Dichte, eine unterschiedliche Porengröße und/oder ein unterschiedliches Elastizitätsmodul aufweisen. Durch diese Verbundbauweise des Einsatzes wird eine verbesserte Schalldämmung über einen größeren Frequenzbereich erreicht, da die unterschiedlichen Kunststoffmaterialien jeweils bei einer anderen Frequenz ihre maximale Dämpfungswirkung entfalten.

Gemäß einem weiteren Aspekt der Erfindung weist der Einsatz mindestens zwei Lagen auf, die jeweils durch eine Scheibe mit einheitlicher Dicke gebildet werden.

Es hat sich gezeigt, dass die schalldämmenden Eigenschaften der Lageranordnung nicht verschlechtert, sondern eher noch verbessert werden, wenn der Einsatz nicht überall satt an den schräg verlaufenden Wänden der Einstülpung anliegt. Es können zwischen dem Einsatz und der Innenfläche der Einstülpung durchaus Freiräume verbleiben, sofern diese nicht zu groß und/oder mindestens auf einer Seite durch das Material des Einsatzes abgeschlossen sind. Bei einem mehrlagigen Aufbau des Einsatzes kann deshalb die Anpassung an die schiefe Form der Einstülpung auch dadurch erreicht werden, dass mehrere Scheiben übereinander gestapelt werden, deren Umfangsränder so gegeneinander versetzt sind, dass zumindest eine grobe Anpassung an die Form der Einstülpung erreicht wird. Auch in diesem Fall ist es möglich, den Einsatz kostengünstig aus vorgefertigtem plattenförmigen Material herzustellen.

Ebenso ist es möglich, einen Kanal für die schräg durch den Einsatz verlaufenden Lenkwelle dadurch zu bilden, dass die einzelnen Scheiben jeweils eine Bohrung aufweisen, die rechtwinklig zur Scheibenebene verläuft, wobei jedoch die Bohrungen der einzelnen Scheiben so gegeneinander versetzt sind, dass sie zusammen einen Kanal mit stufenförmig verlaufenden Wänden für die Lenkwelle bilden.

Gemäß einer vorteilhaften Weiterbildung können die Scheiben nicht nur unterschiedliche Umrissformen und Bohrungen, sondern auch unterschiedliche Dicken haben, und sie können insbesondere auch aus Materialen mit unterschiedlichen akustischen Eigenschaften bestehen.

Im folgenden werden Ausführungsbeispiele der Erfindung anhand der Zeichnung näher erläutert.

Es zeigen:
- Fig. 1: einen Längsschnitt einer erfindungsgemäßen Lageranordnung;
- Fig. 2: eine perspektivische Ansicht einer Lagerplatte und eines Lagers der Lageranordnung gemäß Fig. 1, und
- Fig. 3 - 5: Längsschnitte durch Lageranordnungen gemäß anderen Ausführungsbeispielen.

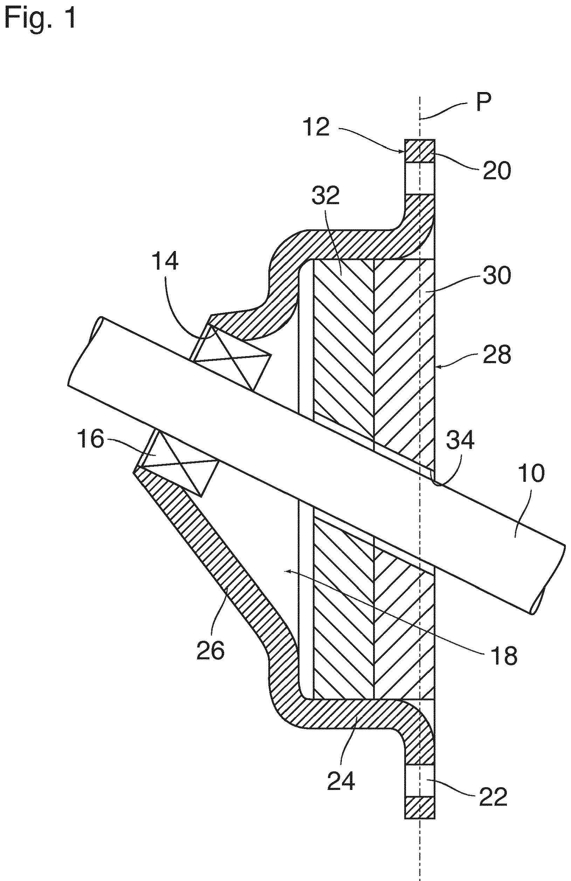

Die in Fig. 1 gezeigte Lageranordnung dient zur Lagerung einer Lenkwelle 10 und weist eine Lagerplatte 12 aus Metall oder wahlweise auch aus Kunststoff auf, die von der Lenkwelle 10 durchsetzt wird und einen Lagersitz 14 für ein Lager 16 bildet. An ihrem äußeren Umfangsrand ist die Lagerplatte 12 eben, so dass sie eine Plattenebene P definiert. Der Lagersitz 14 befindet sich jedoch am Grund einer Einstülpung 18 der Lagerplatte, die aus der Plattenebene P heraustritt. Außerhalb des in der Plattenebene P liegenden äußeren Umfangsrandes der Einstülpung 18 weist die Lagerplatte 12 mehrere Befestigungslaschen 20 mit Schraubenlöchern 22 auf, die er erlauben, die Lagerplatte an einem nicht gezeigte Karosserieteil zu befestigen.

Die Einstülpung 18 gliedert sich in einen zylindrischen äußeren Abschnitt 24, dessen Umfangswand rechtwinklig zur Plattenebene P verläuft, und einen inneren Abschnitt 26, der sich in der Form eines schiefen Kegels zu dem Lagersitz 14 hin verjüngt. Der Lagersitz 14 ist so gestaltet, dass er das Lager 16 in einer Position hält, in der seine Achse - und damit auch die Achse der Lenkwelle 10 - parallel zu der Achse des schiefen Kegels verläuft und somit schräg zur Plattenebene P.

Das Innere der Einstülpung 18 wird weitgehend von einem Einsatz 28 aus Kunststoff ausgefüllt, der die schall- und vibrationsdämpfenden Eigenschaften der Lageranordnung verbessert. In dem in Fig. 1 gezeigten Beispiel wird der Einsatz 28 durch zwei übereinander laminierte Scheiben 30, 32 aus Schaumkunststoffen gebildet, die sich in ihren akustischen Eigenschaften, insbesondere in ihrer Dichte und ihrem Elastizitätsmodul unterscheiden. Wahlweise können auch drei oder mehr Scheiben vorgesehen sein. Die Scheiben können miteinander verklebt sein oder einfach unverbunden in den zylindrischen Abschnitt 24 der Einstülpung eingesteckt sein.

Schaumkunststoffe werden von den Herstellern üblicherweise in der Form von Platten unterschiedlicher Dicke ausgeliefert. Die Scheiben 30, 28 können einfach in der gewünschten Umrissform (in diesem Beispiel kreisförmig) aus solchen Platten ausgeschnitten werden. Für die Herstellung des Einsatzes 28 ist es dann lediglich noch erforderlich, in den Scheiben eine schräg verlaufende Bohrung 34 für die Lenkwelle zu bilden.

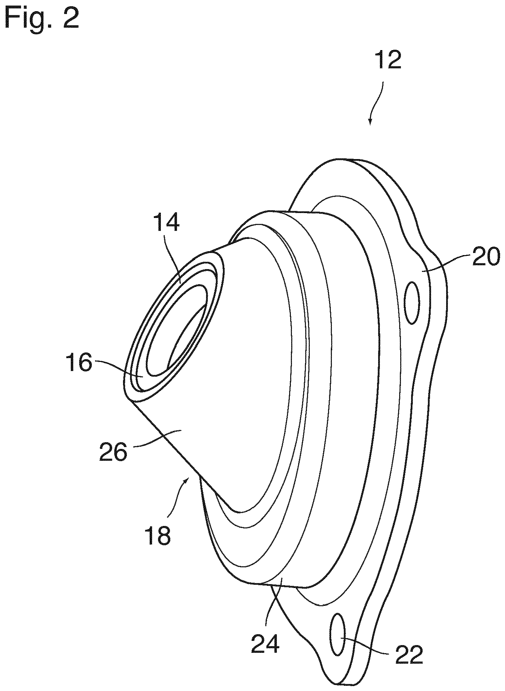

Bei der Lagerplatte 12, die in Fig. 2 in einer perspektivischen Ansicht gezeigt ist, kann es sich beispielsweise um ein Ziehteil aus Blech handeln.

Wahlweise kann der konische Teil der Einstülpung 18, der in Fig. 1 nicht von den Scheiben 30, 32 ausgefüllt wird, durch ein nicht gezeigtes Formteil aus Kunststoff (mit relativ kleinem Volumen) ausgefüllt sein. In einer anderen Ausführungsform ist es auch möglich, die Wände der Einstülpung so zu formen, dass sie die Lenkwelle 10 verhältnismäßig eng umschließen, so dass außerhalb des zylindrischen Abschnitts 24 praktisch kein Hohlraum in der Einstülpung 18 verbleibt.

Die Bohrung 34 der Scheiben 30, 32 kann wahlweise eine Buchse aufnehmen, die von der Lenkwelle 10 mit geringem Spiel durchlaufen wird oder reibungsarm am Unfang der Lenkwelle anliegt.

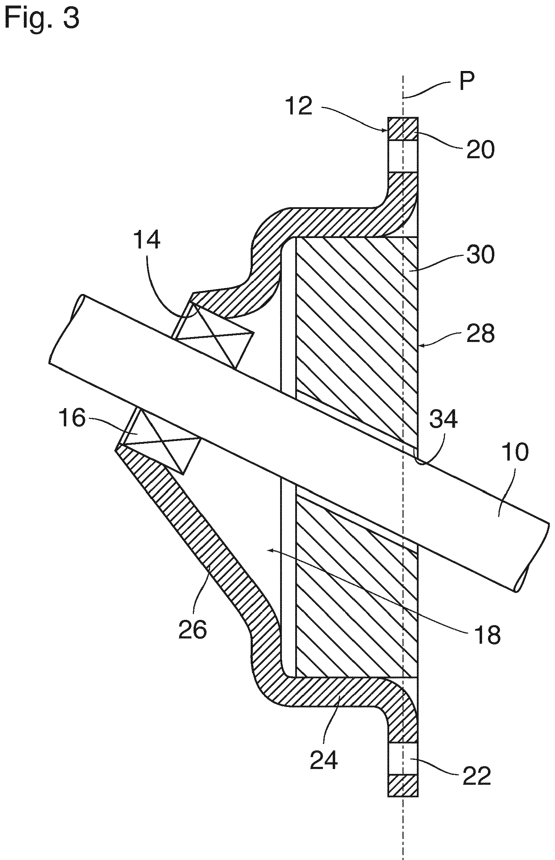

Fig. 3 zeigt ein abgewandeltes Ausführungsbeispiel, bei dem der Einsatz 28 nur durch eine einzige Scheibe 30 aus Schaumstoff gebildet wird.

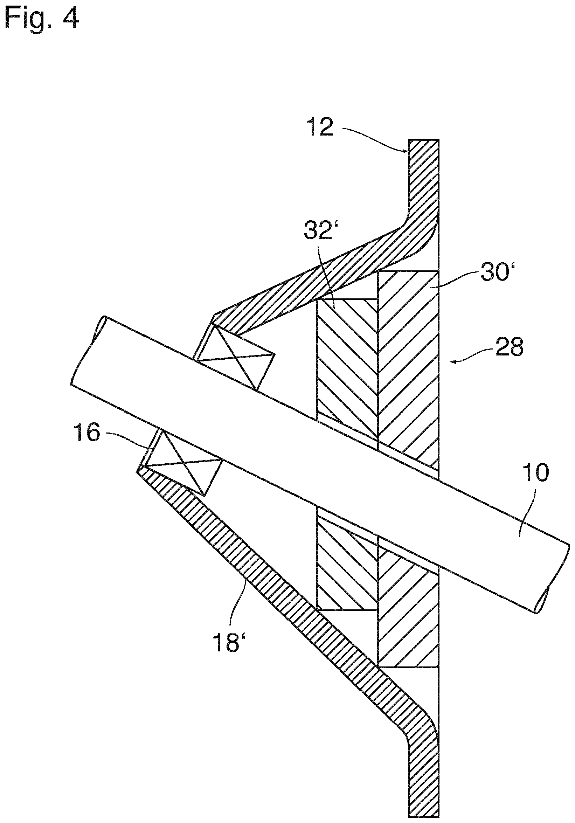

Andererseits zeigt Fig. 4 ein Ausführungsbeispiel, bei dem der Einsatz 28 wieder aus zwei Scheiben 30', 32' besteht, jedoch die Einstülpung, hier mit 18' bezeichnet, keinen zylindrischen Abschnitt aufweist, sondern insgesamt durch einen schiefen Kegelstumpf gebildet wird. Die Anpassung des Einsatzes 28 an die schrägen Wände der Einstülpung wird in diesem Fall dadurch erreicht, dass die Scheiben 30' und 32' nicht kongruent sind, sondern sich in ihren Durchmessern unterscheiden und so versetzt sind, dass sie eine an die Innenkontur der Einstülpung 18 angepasste Stufenpyramide bilden. Zwar bleiben in diesem Fall zwischen den Umfangsrändern der Scheiben und der Wand der Einstülpung 18 gewisse Zwischenräume, doch hat sich gezeigt, dass diese die schalldämmenden Eigenschaften nicht beeinträchtigen, sondern eher noch begünstigen.

Wahlweise können die Scheiben an den Rändern auch schräg beschnitten sein, so dass eine bessere Anpassung an die Form der Einstülpung erreicht wird. Diese Anpassung kann auch dadurch erreicht werden dass die Scheiben leicht in die Einstülpung eingepresst werden, so dass sich das kompressible Material an den Rändern verformt.

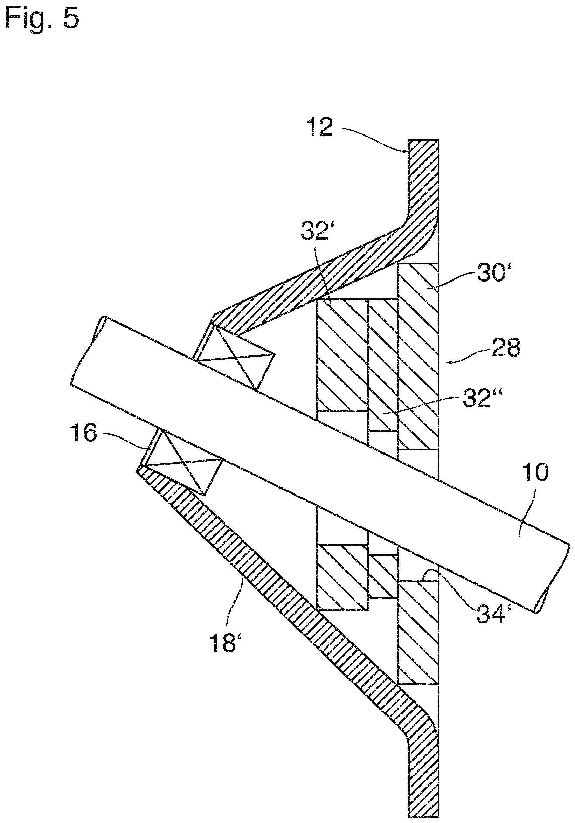

Fig. 5 zeigt ein Ausführungsbeispiel, bei dem die Einstülpung 18' die gleiche Form hat wie in Fig. 4 und der Einsatz 28 durch drei Scheiben 30', 32', 32" gebildet wird, die sich nicht nur in ihrem Durchmesser unterscheiden, sondern auch unterschiedliche Dicken haben. Dabei illustriert die Scheibe 32" auch die Möglichkeit, das einzelne der Scheiben auf ihrem gesamten Umfang einen größeren Abstand zur Wand der Einstülpung 18' aufweisen können.

Die Lenkwelle 10 verläuft in diesem Beispiel durch Bohrungen 34, die rechtwinklig zur Scheibenebene der jeweiligen Scheibe verlaufen, jedoch entsprechend der Schrägstellung der Lenkwelle 10 gegeneinander versetzt sind.

Auch bei diesen Ausführungsformen können die einzelnen Scheiben kostengünstig aus plattenförmigen Ausgangsmaterialien hergestellt werden. Zwar weisen die Scheiben insgesamt eine einheitliche Dicke auf, doch schließt dies nicht aus, dass die Scheiben beim Einpressen in die Einstülpung lokal komprimiert und dadurch etwas verformt werden.

Wie bei dem in Fig. 1 gezeigten Ausführungsbeispiel können die Scheiben aus unterschiedlichen Materialien bestehen und somit unterschiedliche akustische Eigenschaften aufweisen.

Die Scheiben können miteinander verklebt oder verschweißt sein oder wahlweise auch lose aufeinander liegen.

## Patentansprüche

1. Lageranordnung für eine Lenkwelle (10) eines Kraftfahrzeugs, mit einer Lagerplatte (12), die eine Einstülpung (18) und am Grund dieser Einstülpung einen Lagersitz (14) aufweist, in dem ein Lager (16) für die Lenkwelle (10) so gehalten ist, das die Lenkwelle (10) schräg zu einer durch den äußeren Rand der Einstülpung (18) definierten Plattenebene (P) verläuft, und mit einem die Lenkwelle (10) umgebenden und in die Einstülpung (18) eingepassten Einsatz (28) aus Kunststoff, **dadurch gekennzeichnet, dass** die Einstülpung (18) mindestens einen Abschnitt (24) mit rechtwinklig zu der Plattenebene (P) verlaufenden Wänden aufweist und dass der Einsatz (28) mindestens eine in den Querschnitt dieses Abschnitts (24) eingepasste Scheibe (30, 32) mit einheitlicher Dicke aufweist.

2. Lageranordnung nach Anspruch 1, bei der der Einsatz (28) mindestens eine Scheibe (30, 32) aus Schaumkunststoff aufweist.

3. Lageranordnung nach Anspruch 1 oder 2, bei der der Einsatz (28) durch einen Stapel aus mindestens zwei Scheiben (30, 32) gebildet wird.

4. Lageranordnung nach Anspruch 3, bei der die Scheiben (30, 32) aus Kunststoffen mit unterschiedlichen akustischen Eigenschaften bestehen.

5. Lageranordnung für eine Lenkwelle (10) eines Kraftfahrzeugs, mit einer Lagerplatte (12), die eine Einstülpung (18; 18') und am Grund dieser Einstülpung einen Lagersitz (14) aufweist, in dem ein Lager (16) für die Lenkwelle (16) gehalten ist, und mit einem die Lenkwelle (10) umgebenden und in die Einstülpung (18; 18') eingepassten Einsatz (28) aus Kunststoff, **dadurch gekennzeichnet, dass** der Einsatz (28) mindestens zwei Lagen aufweist, die jeweils durch eine Scheibe (30, 32; 30', 32'; 32") mit einheitlicher Dicke gebildet werden.

6. Lageranordnung nach Anspruch 5, bei der die Scheiben (30', 32', 32") sich in ihrer Dicke voneinander unterscheiden.

7. Lageranordnung nach Anspruch 5 oder 6, bei der die Scheiben (30', 32'; 32") aus Kunststoffen mit unterschiedlichen akustischen Eigenschaften bestehen.

8. Lageranordnung nach einem der Ansprüche 5 bis 7, bei der die Scheiben (30', 32'; 32") eine Stufenpyramide bilden.

## Claims

1. A bearing arrangement for a steering shaft (10) of a vehicle, having a bearing plate (12) which has an inversion (18) and, at the bottom of said inversion, a bearing seat (14) in which a bearing (16) for the steering shaft (10) is held in such a way that a steering shaft (10) runs obliquely with respect to a plate plane (P) which is defined by the outer edge of the inversion (18), and having an insert (28) which is made from plastic, surrounds the steering shaft (10), and is fitted into the inversion (18), **characterized in that** the inversion (18) has at least one section (24) with walls which run at right angles with respect to the plate plane (P), and the insert (28) has at least one disk (30, 32) which has a uniform thickness and is fitted into the cross-section of said section (24).

2. The bearing arrangement according to claim 1, wherein the insert (28) comprises at least one disk (30, 32) of foam plastic.

3. The bearing arrangement according to claim 1 or 2, wherein the insert (28) is formed by a stack of at least two disks (30, 32).

4. The bearing arrangement according to claim 3, wherein the disks (30, 32) are formed of plastic materials with different acoustic properties.

5. A bearing arrangement for a steering shaft (10) of a vehicle, having a bearing plate (12) which has an inversion (18; 18') and, at the bottom of said inversion, a bearing seat (14) in which a bearing (16) for the steering shaft (10) is held, and having an insert (28) which is made from plastic, surrounds the steering shaft (10), and is fitted into the inversion (18; 18'), **characterized in that** the insert (28) has at least two layers each of which is formed by a disk (30, 32; 30', 32'; 32") with uniform thickness.

6. The bearing arrangement according to claim 5, wherein the disks (30', 32', 32") have different thicknesses.

7. The bearing arrangement according to claim 5 or 6, wherein the disks (30', 32'; 32") are made of plastic materials with different acoustic properties.

8. The bearing arrangement according to any of the claims 5 to 7, wherein the disks (30', 32'; 32") form a stepped pyramid.

## Revendications

1. Agencement de palier pour un arbre de direction (10) d'un véhicule, ayant une plaque de palier (12) comportant un emboutissage par retournement (18) et un siège de palier (14) sur le fond de cet emboutissage par retournement, siège de palier dans lequel est maintenu un palier (16) pour l'arbre de direction (10) de sorte que l'arbre de direction (10) s'étend en oblique par rapport à un plan de plaque (P) défini par le bord extérieur de l'emboutissage par retournement (18), et un insert (28) en matière plastique enfoncé dans l'emboutissage par retournement (18) et entourant l'arbre de direction (10),
**caractérisé en ce que**
l'emboutissage par retournement (18) comporte au moins une partie (24) avec des parois s'étendant à angles droits par rapport au plan de plaque (P) et **en ce que** l'emboutissage par retournement (28) comporte au moins un disque (30, 32) enfoncé dans la section transversale de cette partie (24) et d'épaisseur uniforme.

2. Agencement de palier selon la revendication 1, dans lequel l'insert (28) comporte au moins un disque (30, 32) en matière plastique expansée.

3. Agencement de palier selon la revendication 1 ou 2, dans lequel l'insert (28) est formé par une pile constituée d'au moins deux disques (30, 32).

4. Agencement de palier selon la revendication 3, dans lequel les disques (30, 32) sont constitués de matières plastiques ayant différentes propriétés acoustiques.

5. Agencement de palier pour un arbre de direction (10) d'un véhicule, ayant une plaque de palier (12) comportant un emboutissage par retournement (18 ; 18') et un siège de palier (14) sur le fond de cet emboutissage par retournement, siège de palier dans lequel est maintenu un palier (16) pour l'arbre de direction (10), et ayant un insert (28) en matière plastique enfoncé dans l' emboutissage par retournement (18 ; 18') et entourant l'arbre de direction (10), **caractérisé en ce que** l'insert (28) comporte au moins deux paliers qui sont respectivement formés par un disque (30, 32 ; 30', 32', 32'') d'épaisseur uniforme.

6. Agencement de palier selon la revendication 5, dans lequel les disques (30', 32', 32'') se différencient les uns des autres par leur épaisseur.

7. Agencement de palier selon la revendication 5 ou 6, dans lequel les disques (30',32', 32'') sont constitués de matières plastiques ayant différentes propriétés acoustiques.

8. Agencement de palier selon l'une des revendications 5 à 7, dans lequel les disques (30', 32', 32'') forment une pyramide étagée.
